# EUROPÄISCHE PATENTSCHRIFT

(11) **EP 0 893 550 B1**
(45) Veröffentlichungstag und Bekanntmachung des Hinweises auf die Patenterteilung: **25.02.2004**
(21) Anmeldenummer: 98108948.5
(22) Anmeldetag: 16.05.1998
(51) Int. Cl.: E04C 2/24

(54) **Verfahren zum Herstellen von Verbundstoffen und -platten und Vorrichtung für dieses Verfahren**
Method of manufacturing composite materials and panels and device for this method
Procédé de fabrication de matériaux et panneaux composites et dispositif correspondant

(30) Priorität: 24.07.1997 DE 19731910
(43) Veröffentlichungstag der Anmeldung: 27.01.1999
(73) Patentinhaber: Wilhelmi Werke Aktiengesellschaft, 35633 Lahnau (DE)
(72) Erfinder: Fiedler, Bernd, Dipl.-Bauing. (FH), 35633 Lahnau (DE); Wachter, Robert, Dipl.-Verfahrensing. (FH), 35585 Wetzlar (DE)
(74) Vertreter: Böck, Bernhard, Dipl.-Ing.

(56) Entgegenhaltungen:
- WO-A-97/25491
- DE-U- 9 300 151

## Beschreibung

Die Erfindung betrifft ein Verfahren zum Herstellen von Verbundstoffen und -platten, beispielsweise einer Akustikplatte in Sandwich-Bauweise für schall- und wärmeabsorbierende Raum-Decken und/oder -Wände, bestehend aus einem porösen Träger und aus einer ein- oder beidseitig mit dem Träger durch einen Klebstoff flächig verbundenen Deckschicht aus einem Vlies, Gewebe, Schaumstoff oder dergleichen luftdurchlässigen Werkstoff.

Ein solches Verfahren und eine zugehörige Verbundplatte sind beispielsweise aus der Offenlegungsschrift DE 195 22 216 A1 bereits bekannt. Um die Nachteile zu vermeiden, die sich beim Auftragen des Klebstoffes zwischen dem Träger und der/den Deckschicht(en) dadurch ergeben, daß in der Regel, wegen des Brandschutzes, eine relativ dicke anorganische, teilweise zusammenhängende und damit die Porosität der Verbundplatte störende Klebstoff-Schicht aufgetragen wird, ist in der vorbekannten Druckschrift vorgesehen, daß der Klebstoff rasterartig mittels Siebdruckverfahrens aufgebracht wird. Der Klebstoff ist auf diese Weise keine zusammenhängende Schicht, sondern Stege aus Klebstoff wechseln mit klebstofffreien Flächen ab. Gegenüber dem Auftragen eines pastosen Klebstoffes mit einem Spachtel, einer Bürste oder dergleichen ist das Siebdruckverfahren zweckmäßiger, weil die klebstofffreien Flächen wesentlich größer gehalten werden können; trotzdem läßt es sich auch hierbei nicht vermeiden, daß die Klebstoff-Schicht wenigstens partiell luftundurchlässig ist. Beide Verfahren sind relativ aufwendig und lassen sich insbesondere nicht in einen stetigen Arbeitsablauf bei der Herstellung der Verbundplatten integrieren, sondern unterbrechen jeweils einen solchen Ablauf.

Aus der DE 93 00 151 U ist ein Verfahren zur Herstellung einer Akustikplatte bekannt, die zur Bildung von schallabsorbierenden Raumdecken oder -wänden dient und in Sandwich-Bauweise aus einem Träger und aus einer ein- oder beidseitig mit dem Träger durch einen Klebstoff flächig verbundenen Deckschicht besteht. Der Träger der bekannten Akustikplatte besteht aus einem porösen Material und für die Deckschicht wird ein poröses Flies oder Gewebe verwendet.

Die Erfindung hat sich deshalb die Aufgabe gestellt, ein Verfahren der eingangs näher bezeichneten Art so zu gestalten, daß es problemlos in einen kontinuierlichen Prozeßablauf eingefügt werden kann und dabei Sorge trägt, daß die Porosität der Verbundplatte weitgehend gewahrt bleibt.

Erfindungsgemäß wird die Aufgabe durch ein Verfahren gelöst, bei dem der Klebstoff in Form eines quell- und rieselfähigen, trockenen Pulvers verwendet wird, das auf die Klebefläche des Trägers aufgetragen und mit einem flüssigen Lösungsmittel benetzt wird, und bei dem ferner nach Quellen des befeuchteten Klebstoffes die einander zugewandten Klebeflächen des Trägers und der Deckschicht (en) aneinandergelegt und unter Druckund/oder Temperatureinwirkung miteinander verklebt werden.

Der Klebstoff kann auf diese Weise gut dosiert, randgenau und gleichmäßig in einem gleichförmig ablaufenden Streuvorgang so aufgebracht werden, daß zwischen den einzelnen Körnern auf den miteinander zu verbindenden Klebeflächen gleichmäßig verteilte Freiflächen verbleiben und die nach Zufügen des Lösungsmittels gequollene und beim Verkleben komprimierte Klebstoff-Schicht immer noch genügend Porosität aufweist, so daß auftreffende Schallwellen nicht reflektiert, sondern weitgehend absorbiert oder bis in den Träger durchgelassen und dort absorbiert werden. Die Funktion der Verbundplatte bleibt auf diese Weise weitgehend erhalten, und gleichzeitig werden die Strukturelemente der Deckschicht(en) und die Oberfläche des Trägers gleichmäßig miteinander verklebt; größerflächig abgedeckte Bereiche, wie sie bei einem mit Siebdruck aufgebrachten Klebstoff unvermeidlich sind, fallen gänzlich weg. Der pulverförmige Klebstoff kann sehr sparsam aufgebracht werden in einem gegenüber den bekannten Verfahren deutlich geringerem Umfang, und auch die eingesetzte Menge an Lösungsmittel fällt wesentlich geringer aus, so daß entsprechend das Gewicht der fertigen Verbundplatte nicht viel größer ist als dasjenige des bloßen Trägers sowie der Deckschicht(en) zusammen; die Trocknungszeit wird dadurch erheblich verkürzt. Ein weiterer Vorteil des erfindungsgemäßen Verfahrens besteht darin, daß die Klebeauftragsmittel wesentlich vereinfacht sind, so daß die Rüstzeiten erheblich verkürzt werden. Überschüssiges Klebepulver kann ohne Aufbereitung wiederverwendet werden.

Dabei können der Klebstoff und das Lösungsmittel in durchaus unterschiedlicher Weise in den Bereich gelangen, der später von der/den Klebstoff-Schicht(en) gebildet wird.

So ist es beispielsweise möglich, daß der Träger zunächst mit dem Lösungsmittel benetzt und danach mit dem Klebstoff bestreut wird. Stattdessen kann man umgekehrt auch so verfahren, daß zunächst der Träger mit Klebstoff bestreut und dieser danach mit dem Lösungsmittel benetzt wird. In beiden Fällen wird/werden anschließend die Deckschicht(en) unbehandelt aufgelegt und in dem nachfolgenden mechanischem Klebvorgang mit dem Träger verbunden. Es ist aber weiterhin auch denkbar, daß der Träger mit Klebstoff bestreut und die Klebfläche(n) der Deckschicht(en) mit Lösungsmittel benetzt und anschließend mit dem Träger verklebt werden wird/werden, so daß der Klebstoff erst zum Quellen kommt, wenn die Deckschicht(en) bereits an den Träger angelegt ist/sind. An der Kontinuität des Verfahrensablaufes ändert sich dabei nichts.

Das Verfahren ist besonders rationell einsetzbar, wenn ein leicht wasserlöslicher, insbesondere kaltwasserlöslicher und gut absorbierender, sprühgetrockneter anorganischer Klebstoff verwendet wird. Ein solcher anorganischer Klebstoff ist nicht brennbar und frei von gesundheitsschädlichen Emissionen; er ist darüberhinaus in der Regel auch temperatur- und alterungsbeständig und bequem entsorgbar.

Besonders gute Ergebnisse lassen sich mit dem erfindungsgemäßen Verfahren erreichen, wenn ein Klebstoff mit einem Schüttgewicht von 50 bis 250 g/l und einer Korngröße von 0,05 bis 1,5 mm, vorzugsweise von 0,063 bis 1,0 mm, verwendet wird, wobei am besten insgesamt zwischen 5 und 400 g/m², vorzugsweise 20 g/m² Klebstoff auf die Klebeflächen aufgestreut und die Klebeflächen und/oder der Klebstoff mit insgesamt zwischen 5 und 200 g/m², vorzugsweise 30 g/m² Lösungsmittel benetzt werden.

Besonders vorteilhaft wird für den Klebestoff ein alkalisches Silikat, beispielsweise Natriumdisilikat verwendet.

Die Topfzeit für die Klebstoff-Schicht entfällt oder wird durch das Verdunsten des Lösungsmittels vorgegeben, wenn die Klebfläche(n) der Deckschicht(en) vor dem Zusammenfügen mit dem Träger mit Lösungsmittel benetzt wird/werden. Sie entfällt auch dann, wenn ein geeigneter Härter zugesetzt wird, bevor die Klebeflächen miteinander verklebt werden.

Vorteilhaft ist es auch, zunächst den Klebstoff auf den Träger aufzubringen und diesen nur soweit zu befeuchten, daß dieser an dem Träger anhaftet. Die Verbindung von Träger und Deckschicht kann dann zu einem späteren Zeitpunkt erfolgen, wobei zuvor noch eine weitere Befeuchtung notwendig ist. Hierdurch kann das Aufbringen des Klebers und das Verkleben von Träger und Deckschicht zu unterschiedlichen Zeiten und verschiedenen Orten durchgeführt werden.

Eine nach dem erfindungsgemäßen Verfahren hergestellte Verbundplatte ist gleichmäßig porös und hervorragend zur Schall- und Wärmedämmung geeignet und kann ohne weiteres in Innenräumen eingesetzt werden, weil sie allen Anforderungen an die Brandsicherheit Genüge leistet. Eine auf das Verfahren abgestimmte Vorrichtung zur Herstellung von Verbundplatten ist dadurch gekennzeichnet, daß der Träger in fortlaufendem Durchlauf kontinuierlich mit dem Klebstoff bestreubar sind, der Klebstoff ebenfalls kontinuierlich mit dem Lösungsmittel und gegebenfalls mit einem Härter kontaktiert wird und each Quellen des befeuchteten Klebstoffs die einander zugewandten Klebeflächen des Trägers und der Deckschicht(en) aneinandergelegt und unter Druck- und/oder Temperatureinwirkung miteinander verklebt werden.

Die Erfindung wird nachstehend anhand der Zeichnung an einem Ausführungsbeispiel näher erläutert. Es zeigen:

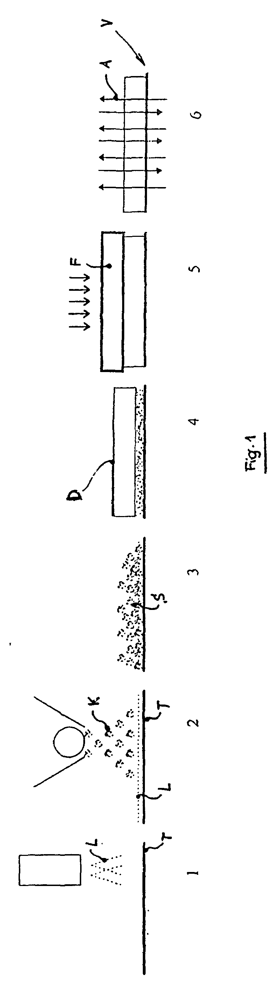

- Fig. 1 bis 3: je eine Variante des erfindungsgemäßen Verfahrens in einer schematisch dargestellten, zugehörigen Vorrichtung.

In den Arbeitsabläufen entsprechend Fig. 1 bis 3 sind insgesamt jeweils sechs Arbeitsschritte mit den Ziffern 1 bis 6 gekennzeichnet worden.

Ein Träger T soll mit (hier) einer Deckschicht D zu einer als Verbundplatte V aufgebauten Akustikplatte gefügt werden.

In der Fig. 1 wird der Träger T in dem Arbeitsschritt 1 mit einem Lösungsmittel L eingesprüht und anschließend (Arbeitsschritt 2) mit dem körnigen Klebstoff K bestreut. In einem Arbeitsschritt 3 verbinden sich beide Komponenten K, L unter Quellen zu einer kompressiblen, porösen Klebstoff-Schicht S. Anschließend (Arbeitsschritt 4) wird diese mit der Deckschicht D belegt und (Arbeitsschritt 5) mittels des (beheizbaren) Stempels F zu einem dünnen, die Deckschicht D mit dem Träger T verklebenden Film komprimiert. Die (Arbeitsschritt 6) fertige Verbundplatte V ist für Schallwellen A oder eine Luftströmung durchlässig.

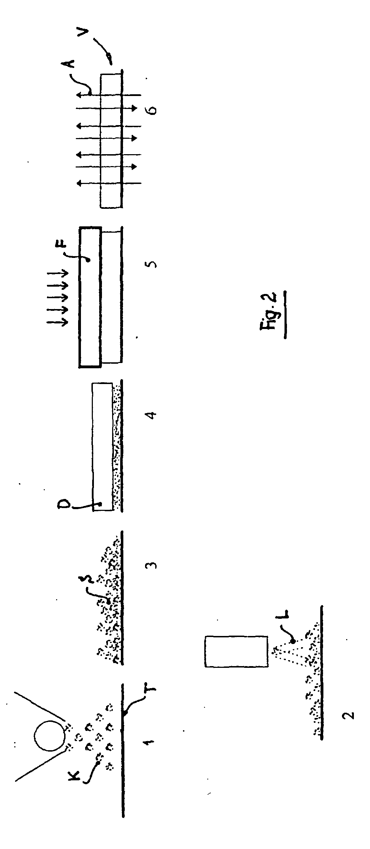

Im Unterschied dazu ist in der Fig. 2 die Reihenfolge der Arbeitsschritte 1, 2 umgekehrt worden: der Träger T wird zunächst mit der körnigen Klebstoff K bestreut, der danach mit dem Lösungsmittel L besprüht wird; das übrige Verfahren bleibt unverändert.

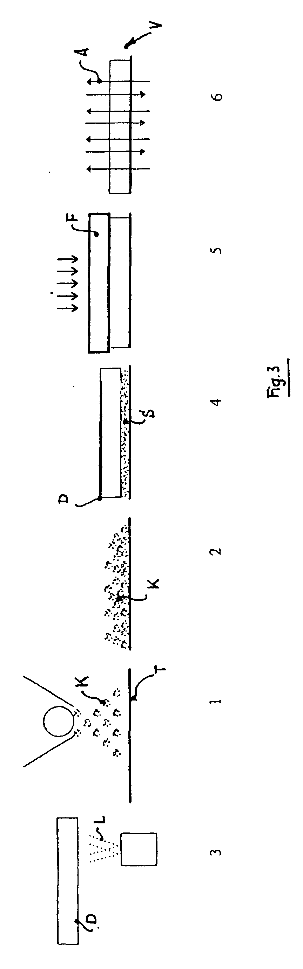

Etwas anders ist der in Fig. 3 skizzierte Ablauf. Hier wird (Arbeitsschritt 3) die Deckschicht D mit dem Lösungsmittel L eingesprüht, während, wie in Fig. 1, der körnige Klebstoff K auf den Träger T aufgestreut wird (Arbeitsschritt 1), der in dem Arbeitsschritt 2 lediglich über die Oberfläche der Trägerplatte T verteilt ist, jedoch unbenetzt, und erst in dem Arbeitsschritt 4 beim Anlagen der Deckschicht D mit dem Lösungsmittel L in Berührung kommt.

### Bezugszeichen

- A: Schallwelle
- D: Deckschicht
- F: Stempel
- K: Klebstoff
- S: Klebstoff-Schicht
- L: Lösungsmittel
- T: Träger
- V: Verbundplatte

## Patentansprüche

1. Verfahren zum Herstellen von Verbundstoffen und -platten (V), beispielsweise einer Akustikplatte in Sandwich-Bauweise für schall- und wärmeabsorbierende Raum-Decken und/oder -Wände, bestehend aus einem porösen Träger (T) und aus einer ein- oder beidseitig mit dem Träger (T) durch einen Klebstoff (K) flächig verbundenen Deckschicht (D) aus einem Vlies, Gewebe, Schaumstoff oder dergleichen luftdurchlässigen Werkstoff,
**dadurch gekennzeichnet, daß**
(a) der Klebstoff (K) in Form eines quell- und rieselfähigen, trockenen Pulvers verwendet wird, das auf die Klebefläche des Trägers (T) aufgetragen und mit einem flüssigen Lösungsmittel (L) benetzt wird, und
(b) nach Quellen des befeuchteten Klebstoffes (K) die einander zugewandten Klebeflächen des Trägers (T) und der Deckschicht(en) (D) aneinandergelegt und unter Druck- und/oder Temperatureinwirkung miteinander verklebt werden.

2. Verfahren nach Anspruch 1, **dadurch gekennzeichnet, daß** der Träger (T) zunächst mit dem Lösungsmittel (L) benetzt und danach mit dem Klebstoff (K) bestreut wird.

3. Verfahren nach Anspruch 1 oder 2, **dadurch gekennzeichnet, daß** zunächst der Träger (T) mit Klebstoff (K) bestreut und dieser danach mit dem Lösungsmittel (L) benetzt wird.

4. Verfahren nach einem der Ansprüche 1 bis 3, **dadurch gekennzeichnet, daß** der Träger (T) mit Klebstoff (K) bestreut und die Klebfläche(n) der Deckschicht(en) (D) mit Lösungsmittel (L) benetzt wird/werden.

5. Verfahren nach einem der vorhergehenden Ansprüche, **dadurch gekennzeichnet, daß** ein leicht wasserlöslicher und gut absorbierender, sprühgetrockneter anorganischer Klebstoff (K) verwendet wird.

6. Verfahren nach Anspruch 5, **dadurch gekennzeichnet, daß** der Klebstoff (K) kaltwasserlöslich ist.

7. Verfahren nach einem der vorhergehenden Ansprüche, **dadurch gekennzeichnet, daß** ein Klebstoff (K) mit einem Schüttgewicht von 50 bis 250 g/l und einer Korngröße von 0,05 bis 1,5 mm, vorzugsweise von 0,063 bis 1,0 mm, verwendet wird.

8. Verfahren nach einem der vorhergehenden Ansprüche, **dadurch gekennzeichnet, daß** insgesamt zwischen 5 und 400 g/m², vorzugsweise 20 g/m² Klebstoff (K) auf die Klebeflächen aufgestreut werden.

9. Verfahren nach einem der vorhergehenden Ansprüche, **dadurch gekennzeichnet, daß** die Klebeflächen und/oder der Klebstoff (K) mit insgesamt zwischen 5 und 200 g/m², vorzugsweise 30 g/m² Lösungsmittel (L) benetzt werden.

10. Verfahren nach einem der vorhergehenden Ansprüche, **dadurch gekennzeichnet, daß** als Lösungsmittel (L) Wasser verwendet wird.

11. Verfahren nach einem der vorhergehenden Ansprüche, **dadurch gekennzeichnet, daß** ein alkalisches Silikat, beispielsweise Natriumdisilikat, als Klebstoff (K) verwendet wird.

12. Verfahren nach einem der vorhergehenden Ansprüche, **dadurch gekennzeichnet, daß** ein geeigneter Härter zugesetzt wird, bevor die Klebeflächen miteinander verklebt werden.

13. Verfahren nach einem der vorhergehenden Ansprüche, **dadurch gekennzeichnet, daß** nur soviel Lösungsmittel (L) auf den Träger (T) aufgebracht wird, daß der Klebstoff (K) am Träger (T) haftet und daß für die Verbindung von Träger (T) und Deckschicht (D) weitere Lösungsmittel zugegeben werden und anschließend die Verbindung unter Druck und/oder Temperatur erfolgt.

14. Vorrichtung zur Herstellung von Verbundstoffen und - platten (V) nach einem der vorhergehenden Ansprüche, **dadurch gekennzeichnet, daß** die Träger (T) in fortlaufendem Durchlauf kontinuierlich mit dem KlebStoff (K) bestreut werden, der Klebstoff (K) kontinuierlich mit dem Lösungsmittel (L) und gegebenfalls mit einem Härter kontaktiert wird und nach Quellen des befeuchteten Klebstoffes die einander zugewandten Klebeflächen des Trägers und der Deckschicht(en) aneinandergelegt und unter Druck- und/oder Temperatureinwirkung miteinander verklebt werden.

## Claims

1. A method of manufacturing composite materials and panels (V), for example an acoustic panel of sandwich construction for sound- and heat-absorbing room ceilings and/or walls, comprising a porous substrate (T) and a covering layer (D) bonded to the surface of the substrate (T) on one or both sides by an adhesive (K) and made of a non-woven or woven material, a foamed material or similar air-permeable material,
**characterised in that**
a) the adhesive (K) is used in the form of a swellable and flowable dry powder which is applied to the adhesion surface of the substrate (T) and is wetted with a liquid solvent (L), and
b) after the wetted adhesive (K) has swelled, the facing adhesion surfaces of the substrate (T) and the covering layer(s) (D) are placed against one another and glued together by the action of pressure and/or temperature.

2. A method according to claim 1, **characterised in that** the substrate (T) is first wetted with the solvent (L) and then sprinkled with the adhesive (K).

3. A method according to claim 1 or 2, **characterised in that** the substrate (T) is first sprinkled with adhesive (K), which is then wetted with the solvent (L).

4. A method according to any one of claims 1 to 3, **characterised in that** the substrate (T) is sprinkled with adhesive (K) and the adhesion surface(s) of the covering layer(s) (D) is/are wetted with solvent (L).

5. A method according to any one of the preceding claims, **characterised in that** an easily water-soluble, spray-dried, inorganic adhesive (K) with good absorption is used.

6. A method according to claim 5, **characterised in that** the adhesive (K) is soluble in cold water.

7. A method according to any one of the preceding claims, **characterised in that** an adhesive (K) with a bulk density of 50 to 250 g/l and a particle size of 0.05 to 1.5 mm, preferably 0.063 to 1.0 mm, is used.

8. A method according to any one of the preceding claims, **characterised in that** a total of between 5 and 400 g/m², preferably 20 g/m² of adhesive (K) is sprinkled onto the adhesion surfaces.

9. A method according to any one of the preceding claims, **characterised in that** the adhesion surfaces and/or the adhesive (K) are wetted with a total of between 5 and 200 g/m², preferably 30 g/m² of solvent (L).

10. A method according to any one of the preceding claims, **characterised in that** water is used as a solvent (L).

11. A method according to any one of the preceding claims, **characterised in that** an alkaline silicate, for example sodium disilicate, is used as an adhesive (K).

12. A method according to any one of the preceding claims, **characterised in that** a suitable hardener is added before the adhesion surfaces are glued together.

13. A method according to any one of the preceding claims, **characterised in that** only so much solvent (L) is applied to the substrate (T) that the adhesive (K) adheres to the substrate (T) and **in that**, to bond the substrate (T) and the covering layer (D), further solvents are added and bonding subsequently takes place under pressure and/or temperature.

14. A device for manufacturing composite materials and panels (V) according to any one of the preceding claims, **characterised in that**, in a continuous process, the substrates (T) are continuously sprinkled with the adhesive (K), the adhesive (K) is continuously contacted by the solvent (L) and, optionally, a hardener and, after the wetted adhesive has swelled, the facing adhesion surfaces of the substrate and the covering layer(s) are placed against one another and glued together by the action of pressure and/or temperature.

## Revendications

1. Procédé de fabrication de matériaux composites et de plaques composites (V), par exemple, d'une plaque acoustique de construction en sandwich pour plafonds et/ou murs de locaux absorbant le bruit et la chaleur, constitués d'un support poreux (T) et d'une couche de revêtement (D), liée au support poreux (T) par sa surface, d'un côté ou des deux côtés et au moyen d'une colle (K), et constituée d'un non-tissé, d'une toile, de mousse ou de matériau analogue perméable à l'air,
**caractérisé en ce que**
a) la colle (K) est utilisée sous la forme d'une poudre sèche, susceptible de gonfler et de s'épandre, qui est appliquée sur la surface d'encollage du support (T) et qui est mouillée avec un solvant liquide (L), et
b) après gonflement de la colle humidifiée (K), les surfaces d'encollage du support (T), tournées l'une vers l'autre, et la, ou les couches de revêtement (D), sont appliquées l'une contre l'autre, et sont collées ensemble sous l'action de la pression et/ou de la température.

2. Procédé suivant la revendication 1, **caractérisé en ce que** le support (T) est d'abord mouillé avec le solvant (L), puis est ensuite enduit avec la colle (K).

3. Procédé suivant la revendication 1 ou la revendication 2, **caractérisé en ce** le support (T) est d'abord enduit avec la colle (K) puis cette dernière est ensuite mouillée avec le solvant (L).

4. Procédé suivant l'une des revendications 1 à 3, **caractérisé en ce que** le support (T) est d'abord enduit avec la colle (K), puis la ou les surfaces de collage de la ou des couches de revêtement (D) est, ou sont mouillées, avec du solvant (L).

5. Procédé suivant l'une des revendications précédentes, **caractérisé en ce qu'**on utilise une colle (K) anorganique, légèrement soluble dans l'eau et bien absorbante, séchée par pulvérisation.

6. Procédé suivant la revendication 5, **caractérisé en ce que** la colle (K) est soluble dans l'eau froide.

7. Procédé suivant l'une des revendications précédentes, **caractérisé en ce qu'**on utilise une colle (K) comportant une densité apparente de 50 à 250 g/l et une granulométrie de 0,05 à 1,5 mm, de préférence, de 0,063 à 1,0 mm.

8. Procédé suivant l'une des revendications précédentes, **caractérisé en ce qu'**au total, on répand sur les surfaces de collage entre 5 et 400 g/m², de préférence, 20 g/m² de colle (K).

9. Procédé suivant l'une des revendications précédentes, **caractérisé en ce que** les surfaces d'encollage et/ou la colle (K) sont mouillées avec, au total, entre 5 et 200 g/m², de préférence, 30 g/m² de solvant.

10. Procédé suivant l'une des revendications précédentes, **caractérisé en ce qu'**on utilise, comme solvant (L), de l'eau.

11. Procédé suivant l'une des revendications précédentes, **caractérisé en ce qu'**on utilise, comme colle (K), un silicate alcalin, par exemple, du disilicate de soude.

12. Procédé suivant l'une des revendications précédentes, **caractérisé en ce qu'**un durcisseur approprié est ajouté avant de coller entre elles les surfaces de collage.

13. Procédé suivant l'une des revendications précédentes, **caractérisé en ce que** l'on applique sur le support (T) seulement assez de solvant pour que la colle (K) fasse prise sur le support (T) et que, pour la liaison du support (T) et de la couche de revêtement (D), on ajoute d'autres solvants, puis ensuite la liaison est réalisée sous l'action de la pression et/ou de la température.

14. Dispositif de fabrication de matériaux composites et de plaques composites (V), suivant l'une des revendications précédentes, **caractérisé en ce que** le support (T) est enduit de colle (K) en continu, au cours d'un processus continu, **en ce que** la colle (K) est mise en contact de façon continue avec le solvant (L) et, le cas échéant, avec le durcisseur, et **en ce que**, après gonflement de la colle humidifiée, les surfaces de collage du support et des couches de recouvrement, tournées l'une vers l'autre, sont appliquées l'une contre l'autre et sont collées ensemble sous l'action de la pression et/ou de la température.
